# EUROPEAN PATENT APPLICATION

(11) **EP 4 032 378 A1**
(43) Date of publication of application: **27.07.2022**
(21) Application number: 21153039.9
(22) Date of filing: 22.01.2021
(51) Int. Cl.: A01B 63/02

(54) **AN INTERROW CULTIVATOR AND A METHOD FOR CULTIVATING BETWEEN ROWS OF CROPS**

(71) Applicant: Thyregod A/S, 7323 Give (DK)
(72) Inventor: JENSEN, Claus Harrild, 7330 Brande (DK)
(74) Representative: Patentgruppen A/S

(57) **Abstract**

Disclosed is an interrow cultivator (1) comprising a mounting structure (2) comprising mounting means (3) for mounting the interrow cultivator (1) onto a tractor (4) and a tool carrying structure (5) including several ground tool sections (6), wherein each ground tool section (6) comprises at least one ground tool (7) arranged to cultivate the soil between several rows of crops (8). The cultivator (1) also comprises a row detection system (9) arranged to detect the position of the ground tool sections (6) in relation to the rows (8) and adjusting means (10) arranged to adjust the position of the tool carrying structure (5) in a traverse direction of the tool carrying structure (5) in response to input from the row detection system (9). Further, the cultivator (1) comprises side offsetting means (12) arranged to offset the tool carrying structure (5) half the distance between two neighbouring ground tool sections (6) of the ground tool sections (6) in the traverse direction.

A method for cultivating between rows of crops (8) and use of an interrow cultivator (1) is also disclosed.

## Description

### Field of the invention

The present invention relates to an interrow cultivator, for example for cultivating ground between rows of crops such as maize. The invention further relates to a method for cultivating ground between rows of crops. Additionally, the invention relates to the use of an interrow cultivator.

### Background of the invention

Crops such as maize are almost always sowed 8, 12 or 16 rows at a time - typically with a distance between rows of 75 cm. These rows are always placed with a uniform distance between the rows, in that the distance between the seed laying tubes on the seeding machine is fixed and constant. However, when a first set of 8, 12 or 16 rows have been sown the distance between the outer row of the first set of rows and the closest row of a neighbouring set of rows is typically not as uniform, in that this distance is controlled by driver of the seeding machine. Thus, when the crops are subsequently sprayed with herbicide or pesticide or cultivated by an interrow cultivator it is important that the tractor pulling the field sprayer or cultivator drives between the rows of crops while working exactly the same set of rows as when the crops were sown. Particularly when interrow cultivating, this is important since the differences in row distance can mean that the cultivator damages the crops. To run in the centre of a set of rows, e.g. 8 rows with a distance between rows of 75 cm, the tractor pulling the agricultural machinery will have to straddle 2 or 4 rows. In this case, to not damage the crops, the tractor will have to have a wheel gauge of (2 x 75=) 1.5 meters to straddle 2 rows, or a wheel gauge of (4 x 75=) 3 meters to straddle 4 rows. The normal wheel gauge of a tractor is around 2 meters and even though the gauge can be adjusted by means of special wheels and other it is not possible to make it as narrow as 1.5 meters. And 3 meters is so wide that the tractor cannot run on public roads in most countries. Thus, dedicated special designed tractors have to be used for this purpose and there are expensive.

An object of the present invention is therefore to provide for an advantageous technique for cultivating crops arranged in rows.

### Summary of the invention

The inventors have identified the above-mentioned problems and challenges related to interrow cultivators and cultivation of ground, and subsequently made the below-described invention which may improve cultivation.

The invention relates to an interrow cultivator comprising a mounting structure comprising mounting means for mounting the interrow cultivator onto a tractor and a tool carrying structure including several ground tool sections, wherein each ground tool section comprises at least one ground tool arranged to cultivate the soil between several rows of crops. The cultivator also comprises a row detection system arranged to detect the position of the ground tool sections in relation to the rows and adjusting means arranged to adjust the position of the tool carrying structure in a traverse direction of the tool carrying structure in response to input from the row detection system. Further, the cultivator comprises side offsetting means arranged to offset the tool carrying structure half the distance between two neighbouring ground tool sections of the ground tool sections in the traverse direction.

By offsetting the tool carrying structure, the invention may permit an interrow cultivator to be towed by a standard tractor which straddles an uneven number of rows of crops (e.g. 3), while the interrow cultivator covers an even number of rows of crops (e.g. 8, 12, or 16), which is advantageous. Thus, a tractor using an interrow cultivator according to the invention may not have to travel in the centre of a set of rows. Instead, the side offsetting means may shift the tool carrying structure to the centre of the set of rows. Hereby is inefficient cultivation avoided with risk of damaging crops and permits standard tractors with wheel gauges of approximately 2 meters to properly cover a particular number of rows with the interrow cultivator.

The invention is particularly useful since laying tubes on seeding machines set a predetermined structure of the rows of crops which conventional interrow cultivators on a standard tractor may not be able to effectively cultivate properly between.

An interrow cultivator may be understood as a type of agricultural equipment which is suitable for cultivating ground between rows of crops, such as maize, beets, hemp or other. The ground tools of an interrow cultivator typically work near the surface of the ground with the purpose of weed control, e.g. for stopping noxious weed from competing with the desired crops. An interrow cultivator may for example be mounted to a tractor via mounting means, such that the tractor can drag the interrow cultivator or such that the tractor my push the cultivator.

A tractor may include means for raising and lowering the cultivator and/or the tool carrying structure or the ground tools, such that the ground tool can be lowered when they are required to cultivate the ground and raised when they are not. Alternatively, such means may be located on the interrow cultivator.

A mounting structure may be understood as a mechanical arrangement for detachably mounting the interrow cultivator onto a tractor, typically behind the tractor. It may link thus link the tractor to the interrow cultivator. However, an interrow cultivator is not limited to being mounted behind a tractor. It may for example be mounted in front of a tractor.

Mounting means may be understood as a means for mounting the interrow cultivator to a tractor, e.g. for towing. Mounting means may include signal and power transmission between the tractor and the interrow cultivator, as well as a mechanical coupling. Mounting means may for example be based on a fixed mount, three-point hitches or quick hitches, hydraulics, and/or power take-off systems and may include plugs, pegs, bars or other.

A tool carrying structure may be understood as a main body of an interrow cultivator including the ground tools. The tool carrying structure may further foldable enabling the interrow cultivator to be transported on public roads and reducing storage space.

A ground tool section may be understood as a section of ground tools. The ground tool sections are arranged such that during normal use of the interrow cultivator, one ground tool section is located between each of the rows of crops. A ground tool section may include one or more ground tools, for example one ground tool, two ground tools, three ground tools, four ground tools, five ground tools, or more than five ground tools.

Ground tools may be understood as a tool for cultivating ground, for example for agricultural purposes. A ground tool may for example have the shape of a wedge, an apex, a knife, a chisel, a sweep, a disc, or a wing. It may be connected to the rest of the tool carrying structure by means of a suspension arrangement such as an elongated rigid mechanical coupling. An interrow cultivator may for example have a plurality of ground tools located towards a bottom direction, such that these ground tools are capable of engaging and/or cultivating the ground when the interrow cultivator is used by a tractor on a field with rows of crops. Some ground tool may further be rotationally mounted and rotate upon engagement with the ground. Thus, ground tools are typically suitable for cultivating soil between rows of crops.

A row detection system may be understood as a system suitable for detecting rows of crops. Preferably, a row detection system is capable of detecting a relative distance to one or more rows of crops, for example a distance from the row detection system to a certain row of crops - or rows of crops - or from a reference point of the interrow cultivator to a certain row of crops - or rows of crop. Some examples are radar systems, lidar systems, sonar systems, and camera systems including image analysis.

It is typically challenging to drive a tractor and an interrow cultivator perfectly relative to the crops. By having a row detection system, it is possible for the interrow cultivator to continuously adjust its position relative to the crops, using adjustment means, to reduce the risk of damaging crops.

Adjusting means may be understood as may be understood as a means for adjusting the tool carrying structure, typically in a direction transverse to the rows of crops. E.g., if the row detection system finds that a relative distance between a reference point of the tool carrying structure and a row of crops has changed, the adjusting means adjusts the tool carrying structure to undo this change. In practice, an approximately constant distance between a reference point of the tool carrying structure and a certain row of crops may then be maintained. Adjusting means may for example be based on hydraulic cylinders (e.g. hydraulic actuator), pneumatic cylinders (e.g. pneumatic actuator), electrical linear actuators or a rotating motor with conversion of rotary motion into linear motion.

Side offsetting means may be understood as a means for adjusting the tool carrying structure, typically in a direction transverse to the row of crops. A purpose of the side offsetting means is to offset the tool carrying structure by half the distance between the rows of crops and this distance is the same as half the distance between the centre of each ground tool sections. Side offsetting means may for example be based on hydraulic cylinders (e.g. hydraulic actuator), pneumatic cylinders (e.g. pneumatic actuator), electrical linear actuators or a rotating motor with conversion of rotary motion into linear motion.

As an example, the adjusting means and the side offsetting means may each be based on respective means for shifting the tool carrying structure, e.g. each be based on a respective linear actuator. Or, as another example, the adjusting means and the side offsetting means may be based on a single means for shifting the tool carrying structure, e.g. a single linear actuator, which is capable of adjusting the position of the tool carrying structure both by an offset of half the distance between neighbouring rows of crops/ground tool sections and to maintain an approximately constant distance between a reference point of the tool carrying structure and a certain row of crops.

Typically, the adjusting means and/or the side offsetting means mechanically connects the mounting structure to the tool carrying structure, such that the relative position of the tool carrying structure is adjusted relative to the mounting structure and thus relative to any tractor onto which the mounting structure is mounted.

A traverse direction of the tool carrying structure may be understood as a direction which is traverse or perpendicular relative to an intended direction of movement of the tool carrying structure. For example, such that under normal use of the interrow cultivator being mounted on a tractor faring along rows of crops on a field, the traverse direction of the tool carrying structure is a direction traverse to the longitudinal extend of the rows of crops.

In an aspect, the side offsetting means comprises an offsetting linear actuator connected to the mounting structure and the tool carrying structure.

An offsetting linear actuator may be advantageous for performing the transverse motion required by the side offsetting means. An interrow linear actuator may for example be a mechanical actuator, a hydraulic actuator, a pneumatic actuator, or an electromechanical actuator.

In an aspect, the adjusting means comprises an adjusting linear actuator connected to the mounting structure and the tool carrying structure.

An adjusting linear actuator may be advantageous for performing the transverse motion required by the adjusting means. An interrow linear actuator may for example be a mechanical actuator, a hydraulic actuator, a pneumatic actuator, or an electromechanical actuator.

In an aspect, the adjusting means and the side offsetting means are the same combined adjusting means.

Forming the adjusting means and the side offsetting means as a single combined adjusting means is advantageous in that it reduces cost and simplifies the cultivator design.

In an aspect, the combined adjusting means is a combined linear actuator connected to the mounting structure and the tool carrying structure.

Even though the adjusting means and the side offsetting means may perform two distinct tasks, the adjusting means and the side offsetting means may be performed by the same combined adjusting means, thus simplifying the interrow cultivator, which is advantageous. A combined adjusting means may for example be a combined linear actuator which may be advantageously capable of carrying out both the adjustments required by adjustment means and the offset required by the side offsetting means.

In an aspect, the tool carrying structure comprises folding means arranged to fold at least a first part of the tool carrying structure at least partly over a second part of the tool carrying structure to reduce the width of the tool carrying structure in the traverse direction.

Folding means enables transportation on public roads and reduced storage space, which is advantageous. Folding means may for example include joints of the tool carrying structure arranged perpendicularly to the traverse direction of the tool carrying structure. Folding means may further include means for folding the tool carrying structure at these joints, e.g. one or more linear actuators.

In an aspect, the adjusting means comprises guide means interconnecting the mounting structure and the tool carrying structure.

In an aspect, the side offsetting means comprises guide means interconnecting the mounting structure and the tool carrying structure.

Guide means may for example be arranged to guide the tool carrying structure along the traverse direction relative to the mounting structure. Guide means may for example include one or more sliding bearings of the mounting means arranged along a rod of the tool carrying system. Or one or more sliding bearings of the tool carrying system arranged along a rod of the mounting means. The sliding bearings and the rod may alternatively be replaced by a ridge which is slidably engaged into a channel. Or the sliding bearings and the rod may be replaced by a linear rail bearing or any other linear guide system.

Having guiding means is advantageous, since such means may structurally support the intended motion of side offsetting means or adjusting means.

In an aspect, the row detection system comprises a camera.

A camera is advantageous for a row detection system, since it may permit detailed image analysis from which a relative distance to one or more rows of crops can be determined and, optionally, recorded.

In an aspect, the combined adjusting means is located on the interrow cultivator such that an adjustment range of the tool carrying structure is asymmetrically located relative to the mounting structure or mounting means.

In an aspect, the combined adjusting means is located on the interrow cultivator such that an adjustment range of the tool carrying structure is asymmetrically located relative to the tractor when the interrow cultivator is mounted on the tractor.

In an aspect, the adjustment range is asymmetrically located by at least 5 cm, for example at least 10 cm, for example at least 20 cm, for example at least 30 cm, such as 37.5 cm.

In an aspect, the adjustment range is at least 50 cm, for example at least 60 cm, for example at least 70 cm, such as 77.5 cm.

The combined adjusting means may set a range in which a centre of the tool carrying structure can be moved along the transverse direction. For example, a combined linear actuator may have a stroke of 77.5 cm, i.e. the combined linear actuator may be adjusted from positions ranging from 0 cm to 77.5 cm. When the interrow cultivator is mounted on a tractor, the combined linear actuator is adjustable such that the centre of the tool carrying structure can be aligned with the transverse centre of the tractor, but this position may not correspond to centre of the adjustment range. Such a centred position of the tool carrying structure may for example correspond to a position of the linear actuator of 20 cm. Thus, as an example of offsetting the tool carrying structure from the centred position, the tool carrying structure can be offset/moved by 37.5 cm (an example of half of a row distance, when row distance is 75 cm) by the combined linear actuator to arrive at a position of 57.5 cm of the linear actuator. From here, even though the linear actuator has already moved the tool carrying structure by 37.5 cm relative to a symmetrical position, the linear actuator can still move the tool carrying structure up to a total of 20 cm further in the same direction if this should be necessary for continuously adjusting the position of the tool carrying structure to maintain a constant relative distance to rows of crops. Thus, as a result of an asymmetrically located adjustment range, the combined linear actuator is able to implement the desired offset while maintaining a constant relative distance to rows of crops. This may for example be viewed as a cheaper alternative to using a combined linear actuator with a larger adjustment range and is thus advantageous. However, a linear actuator with a larger adjustment range, e.g. 115 cm may have the advantage that it is able to implement the offset in two directions. In any case, the adjustment range may not necessarily be asymmetrically located.

The adjustment range being asymmetrically located may be understood as a centre of the adjustment range being off-centred from the tractor when mounted.

The invention further relates to a method for cultivating between rows of crops, the method comprising the steps of:
mounting an interrow cultivator onto a tractor;
driving the tractor mounted to the interrow cultivator to a field comprising rows of crops, wherein a row distance between the rows of crops in at least a part of the field is substantially uniform;
positioning the tractor with first side ground engaging means on a first side of the tractor between a first set of neighbouring rows of crops and with second side ground engaging means on a second side of the tractor between a second set of neighbouring rows of crops;
offsetting a tool carrying structure of the interrow cultivator half the row distance in a direction traverse to the rows of crops;
engaging the soil between several rows of crops by means of ground tools of the tool carrying structure;
driving the tractor mounted to the interrow cultivator in a direction substantially parallel to the rows of crops;
detecting the position of the ground tools in relation to the rows of crops by a row detection system; and
adjusting the position of the tool carrying structure in the direction traverse to the rows of crops in response to input from the row detection system.

Ground engaging means may for example be understood as wheels or continuous tracks such as a soft belt of synthetic rubber or a solid chain track. Typically, a tractor will have ground engaging means on both sides, e.g. wheels both on a first side of the tractor and on a second, opposite, side of the tractor.

A row distance may for example be understood as a distance between two neighbouring rows of crops. This distance is typically predetermined by the distance between seed laying tubes of a seeding machine.

The method for cultivating rows of crops according to the invention may have any of the same advantages as an interrow cultivator according to the invention. For example, it may permit a standard tractor to straddle any number of rows of crop while mounted interrow cultivator is offset by half a row distance to adjust to the row pattern, which is advantageous.

The step of offsetting the tool carrying structure may for example be performed by a driver of the tractor through the push of a button, a pull of a lever, or by rotating or knob, but the step of offsetting the tool carrying structure according to the invention is not limited to any particular means. It may also be performed automatically, e.g. upon driving onto a field, based on input from the row detection system, or when unfolding the tool carrying structure.

In an aspect, the method further comprises the step of folding the tool carrying structure to reduce the width of the tool carrying structure before driving the tractor mounted to the interrow cultivator to the field.

In an aspect, the method further comprises the step of unfolding the tool carrying structure to increase the width of the tool carrying structure before engaging the soil.

The tool carrying structure may advantageously be folded prior to driving the tractor onto a field, which may permit driving on public roads an ease storage of the interrow cultivator, which is advantageous. And when necessary for engagement with the field, the tool carrying structure may be unfolded to utilize the full width, which is advantageous.

In an aspect, offsetting the tool carrying structure and adjusting the position of the tool carrying structure is performed by the same combined linear actuator.

A combined linear actuator may permit a simplified design of the interrow cultivator, which is advantageous.

In an aspect, the method further comprises the step of adjusting a ground engaging means gauge of the tractor and/or adjusting the distance between neighbouring ground tools to substantially match the row distance.

The ground engaging means gauge may be understood as a distance between the first side ground engaging means and the second side ground engaging means, e.g. distance between lift and right wheels of the tractors. This gauge may be adjustable for some tractors and adjusting it to substantially match the row distance is thus advantageous. Similarly, adjusting the distance between neighbouring ground tools or ground tool sections to match the row distance may also be advantageous. Such adjustments may permit a reduced risk of damaging crops.

In an aspect, the previously discussed method is performed by means of an interrow cultivator according to any of the previously discussed interrow cultivators.

An interrow cultivator according to the invention may is facilitate the method of the invention, which is advantageous.

In an aspect, three rows of crops are located between the first side ground engaging means and the second side ground engaging means.

In an aspect, the tool carrying structure spans an even number of the rows of crops, such as 8, 12, or 16.

The invention may permit a standard tractor to have an uneven number of rows of crops, such as 3, to be located between the first side ground engaging means and the second side ground engaging means while the tool carrying structure spans a particular set of rows of crops having an even number of rows, which is advantageous. For example, the invention may allow a tractor to straddle 3 rows of crops while the tool carrying structure covers 12 rows of crops.

The invention also relates to use of an interrow cultivator according to any of the previously discussed interrow cultivators for cultivating the soil between rows of maize.

An interrow cultivator according to the invention may improve cultivation of soil between rows of maize, which is advantageous. Alternatively, the interrow cultivator according to the invention may also be used for other types of crops, such as sugar beets or lettuce. As such, the invention is not limited to a particular type of crop.

The invention also relates to use of side offsetting means to offset a tool carrying structure of an interrow cultivator by half a distance between two neighbouring rows of crops in a direction traverse to the two neighbouring rows of crops.

The offset may for example be in a transverse direction relative to the two neighbouring rows of crops. The offset may for example be quantified as a relative distance in the transverse direction between a centre of the tool carrying structure and the mounting structure, or between a centre of the tool carrying structure.

The use of side offsetting means to offset a tool carrying structure by half a distance between two neighbouring rows of crops, the cultivation of ground may be improved, which is advantageous.

### The drawings

Various embodiments of the invention will in the following be described with reference to the drawings where
fig. 1 illustrates a schematic illustration of an interrow cultivator of the invention,
fig. 2 illustrate a method steps according to the invention,
fig. 3a-c illustrates offsetting the position of a tool carrying structure and adjusting the position of a tool carrying structure by a combined adjusting means according to the invention,
fig. 4 illustrates an interrow cultivator mounted to a tractor on a field according to the invention,
fig. 5a-d illustrate top, side, back, and angled views of an embodiment of the invention,
fig. 6a-c illustrate top, side, and back views of an embodiment of the invention with a tool carrying structure in an offset position,
fig. 7a-c illustrate top, side, and back views of an embodiment of the invention with a folded tool carrying structure.

### Detailed description

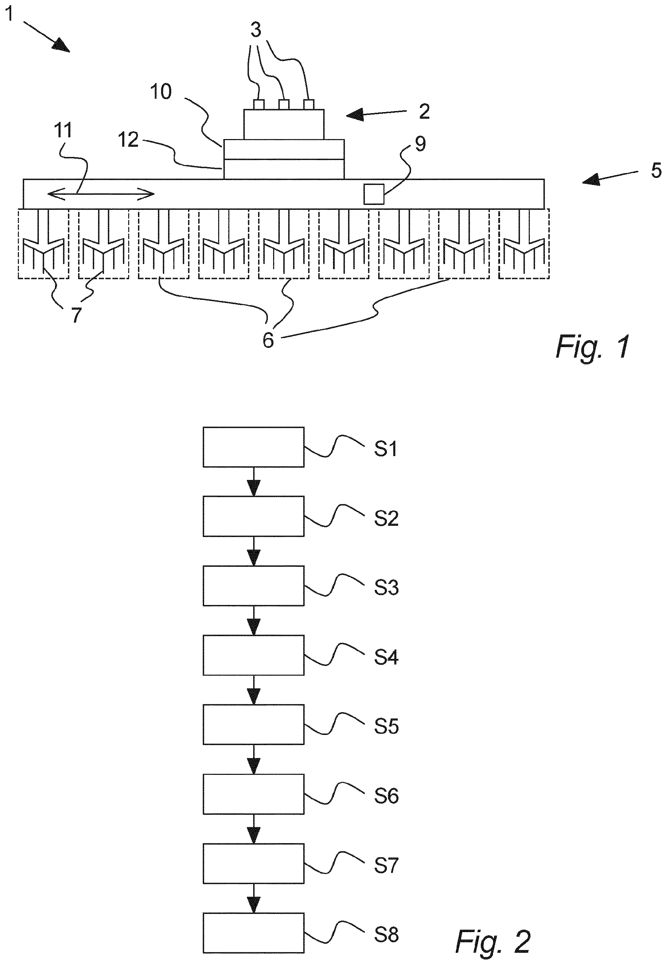

Fig. 1 illustrates a schematic illustration of an interrow cultivator 1 of the invention. The interrow cultivator 1 has a mounting structure 2 with mounting means 3. These mounting means 3 allows the cultivator 1 to be mounted onto a tractor 3, for example using a three-point hitch of the tractor.

The mounting structure 2 is attached is coupled to a tool carrying structure 5 via adjusting means 10 and side offsetting means 12. The tool carrying structure 5 comprises a total of nine ground tool sections 6, which makes this particular embodiment of the invention for cultivating the ground around eights rows of crops. Each ground tool section 6 comprises one or more ground tools 7 for cultivating ground.

The embodiment further comprises a row detection system 9. In this particular embodiment, the row detection system 9 is attached to the tool carrying structure but note that a row detection system 9 is not restricted to any particular placement according to the invention. In this embodiment, the row detection system comprises a camera which is arranged to regularly record images of rows of crops to determine a relative distance from one or more particular rows of crops and one or more particular ground tools 7 or ground tool sections 6. Based on input from the row detection system 9, the adjusting means adjusts the position of the tool carrying structure relative to the mounting structure 2 in a transverse direction 11. Thus, the tool carrying structure 5 can maintain a constant distance to rows of crops which minimizes risk of damaging the crops.

The transverse direction 11 is generally approximately the same direction is the axis along which the ground tool sections are arranged. The transverse direction is perpendicular to the direction along which the interrow cultivator moves when it is mounted to a tractor which travels straight ahead. The transverse direction is approximately parallel to the axis along which the tool carrying structure has its largest extend.

The side offsetting means 12 permits the tool carrying structure 5 to be offset in the transverse direction 11 by an extend corresponding to approximately half a ground tool section 6. This offset may be initiated by the input, for example input from a driver of a tractor. This input may for example be based on engaging with a button or a switch on the interrow cultivator 1. Alternatively, the input may be provided by a wired or wireless connection, for example such that a driver of the tractor can offset the tool carrying section 5 from the driver's seat of a tractor.

The offsetting means 12 thus permits the driver to offset the tool carrying structure 5 by an offset corresponding to half the distance between the centres of two neighbouring ground tool sections 6. Since the ground tool sections are typically arranged to match the distance between rows of crops, this may correspond to offsetting the tool carrying structure by half the distance between neighbouring rows of crops. This grants more liberty to how the tractor may engage with a set of rows of crops. As an example, a tractor can straddle three rows of crops while the interrow cultivator properly cultivate the ground around eight rows of crops. Thus, necessary damage to the crops or expensive specialized equipment is avoided.

Fig. 2 illustrate a method steps S1-S8 according to the invention. The method related to cultivating between rows of crops.

In a first step S1, an interrow cultivator is mounted onto a tractor. It may for example be mounted through a three-point hitch, but embodiments of the invention are not limited to a particular type of mount.

In a next step of the method S2, the tractor mounted to the interrow cultivator is driven to a field comprising rows of crops. At the field, a row distance between rows of crops is substantially uniform in at least a part of the field. The row distance may for example be the distance between neighbouring rows of crops.

Typically, the distribution of seed laying tubes of a seeding machine determine the distance between rows of crops in various sections of a field. If a seeding machine traverses a field several time, it may lay seeds for several sections of rows of crops, wherein each section has a uniform distance between the rows within that section. However, the distance between these sections may not necessarily be uniform or constant.

In a next step of the method S3, first side ground engaging means on a first side of the tractor is positioned between a first set of neighbouring rows of crops. Further, second side ground engaging means on a second side of the tractor is positioned between a second set of neighbouring rows of crops. Both the first set of neighbouring rows of crops and the second set of neighbouring rows of crops may be a subset of the rows of crops on the field. Note that, typically the ground engaging means may be wheels. Thus, this method step may simply correspond to position the wheels on either side of the tractor between different rows of crops.

In a next step of the method S4, a tool carrying structure of the interrow cultivator is being offset, for example by side offsetting means. The tool carrying structure is being offset in a direction traverse to the rows of crops, e.g. the traverse direction of the tool carrying structure. This may permits minimizing the risk of damaging crops, and/or an improved efficiency of cultivating the field of crops.

In a next step of the method S5, the soil between the rows of crops is engaged by ground tools of the tool carrying structure. Thus, the ground between the rows of crops is cultivated. The ground tools may for example be arranged in ground tool sections, such that that there is one ground tool section between each pair of neighbouring rows of crops.

In a next step of the method S6, the tractor mounted to the interrow cultivator is driven in a direction substantially parallel to the rows of crops.

In a next step of the method S7, the position of the ground tools or ground tool sections in relation to the rows of crops is detected by a row detection system.

In a next step of the method S8, the position of the tool carrying structure is adjusted in the direction traverse to the rows of crops in response to input from the row detection system. The position may for example be adjusted to maintain a constant distance between ground tools and rows of crops, to avoid damaging to the crops.

The steps of position the tractor S3, engaging the soil S5 and driving the tractor parallel to the rows of crops S6, detecting the position S7, and adjusting the position S8 may typically be performed simultaneously. Further the tool carrying structure may or may not be offset simultaneously/synchronously as described in the step of offsetting the tool carrying structure S4.

Note that embodiments of the invention are not restricted to a particular order in which the steps are carried out. Further, note that other embodiments of the invention may comprise additional steps. For example, steps of folding/unfolding the tool carrying structure, adjusting ground engaging means gauge, adjusting the distance between neighbouring tools or tool sections, etc.

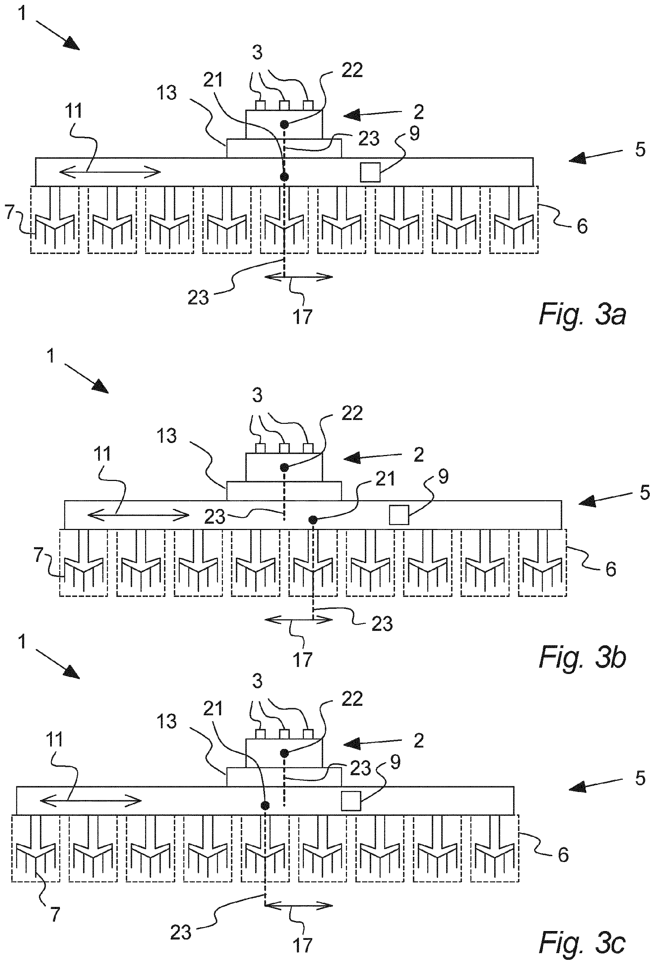

Fig. 3a-c illustrates offsetting the position of a tool carrying structure 5 and adjusting the position of a tool carrying structure 5 by a combined adjusting means 13 according to the invention.

The interrow cultivator 1 illustrated in figs. 3a-3c is similar to the interrow cultivator illustrated in fig. 1. However, instead of having distinct adjusting means 10 and side offsetting means 12, the embodiment in figs. 3a-3c has a combined adjusting means 13, for example a combined linear actuator.

The three subfigures 3a-3c illustrate different positions of the tool carrying structure 5 in the transverse direction 11 in relation to an adjustment range 17.

In fig. 3a, the centre of the tool carrying structure 21 is aligned with the centre of the mounting structure 22 as shown with indication lines 23. From here, the tool carrying structure can both be adjusted in both directions and/or offset to the right-hand side. Thus, the adjustment range 17 is asymmetric, which can be seen by the bottom indication line 23 not being centred to the adjustment range.

Note that the adjustment range 17, centres 21,22, and indication lines 23 are merely drawn on the figure for illustrative purposes and may not necessarily be a part of the actual embodiment.

In fig. 3b, the tool carrying structure 5 has been offset to the right-hand side. The distance of the offset corresponds to half the distance between centres of the ground tool sections 6. Note how the two indication lines 23 are not aligned along the transverse direction, and how the bottom indication line 23 is offset to the right-hand side compared to the adjustment range 17.

The adjustment range is arranged such that independently of whether the tool carrying structure has been offset or not, there is still some vacant adjustment range, such that further adjustments can be performed based on input from the row detection system 9.

In fig. 3c, the tool carrying structure has been shifted to the left-hand side, for example based on adjustments in response to input from the row detection system. This can be seen by the relative positions of centres 21,22, indication lines 23, and adjustment range 17. In this particular illustration, the tool carrying structure 5 is at the limit of the adjustment range 17, i.e., it cannot be adjusted substantially further to the left-hand side. This is indicated by the bottom-most indication line 23 relative to the adjustment range 17.

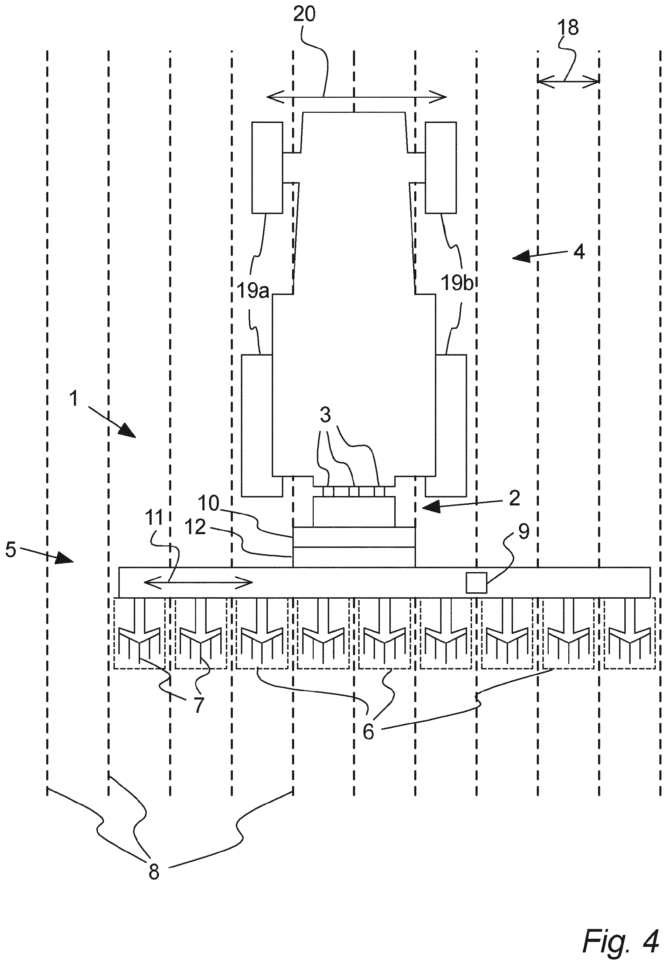

Fig. 4 illustrates an interrow cultivator 1 mounted to a tractor 4 on a field according to the invention. The field has rows of crops 8.

The tractor 4 has positioned its wheels 19a on one side between one pair of neighbouring rows of crops 8, and its wheels 19b on the other side between another pair of neighbouring rows of crops 8. Between the sets of wheels 19a,19b, a total of three rows of crops 8 is located.

Further, the tractor 4 may be driven in a direction substantially parallel to the rows of crops 8, e.g. an upwards direction of the particular illustration.

The tool carrying section 5 of the interrow cultivator 1 has been offset to the right-hand side relative to the mounting structure and the centre of the tractor using the side offsetting means 12. The offset corresponds to half the distance 18 between rows of crops 8. Consequently, the ground tool sections 6 are located well between the rows of crops 8, such that the soil/ground between the rows of crops 8 may be engaged by the ground tools to cultivate the soil/ground.

In this particular illustration, the interrow cultivator covers the ground around eight rows of crops 8. Theses eight rows of crops 8 are shifted transversely relative to the centre of the tractor 4, as permitted by the invention. This section of eight rows of crops may have distances between neighbouring rows of crops which are substantially uniform, whereas the distance from this section to a neighbouring section of eight rows of crops may not necessarily be uniform.

If instead a conventional interrow cultivator were used without side offsetting means, the illustrated positioning of the tool carrying structure 5 relative to the tractor 4 and the rows of crops 8 may not be possible. Thus, the invention is advantageous in comparison with conventional methods and conventional interrow cultivators.

While the tractor is being driven, the row detection system 9 may detect the distance between ground tools 7/ground tool sections 6 relative to the rows of crops 8, such that the adjusting means 10 may regularly adjust the position of the tool carrying structure 5, for example to maintain a constant relative distance between ground tools 7 and rows of crops 8.

The figure further illustrates the ground engaging means gauge 20, e.g. the distance between the wheels on the left-hand side 19a and the wheels on the right-hand side 19b of the tractor 4. In some embodiments, this gauge 20 may be adjusted to match the distance between rows of crops 8. The distance between ground tool sections 6 may also be adjusted in some embodiments.

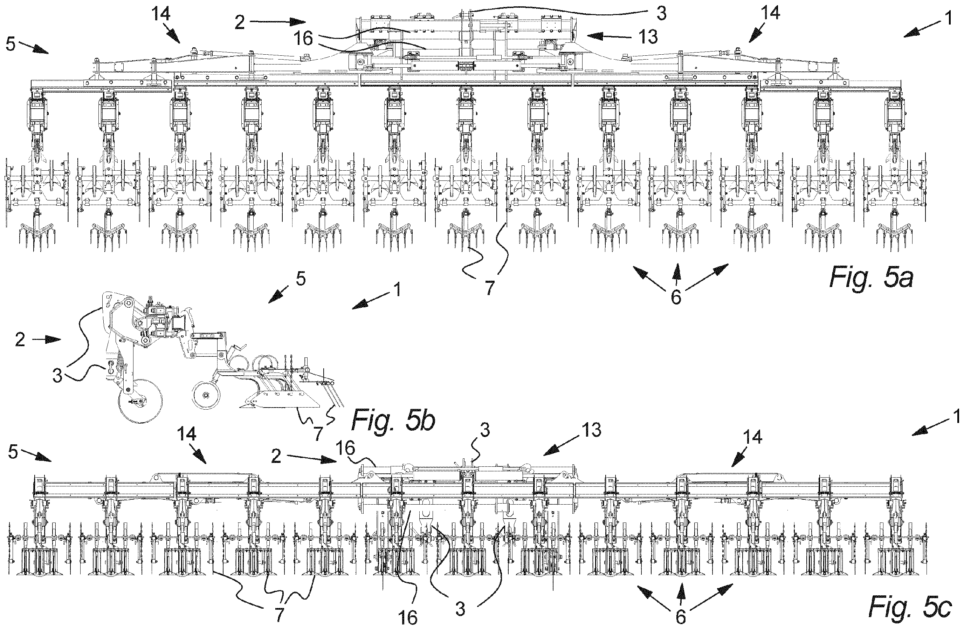

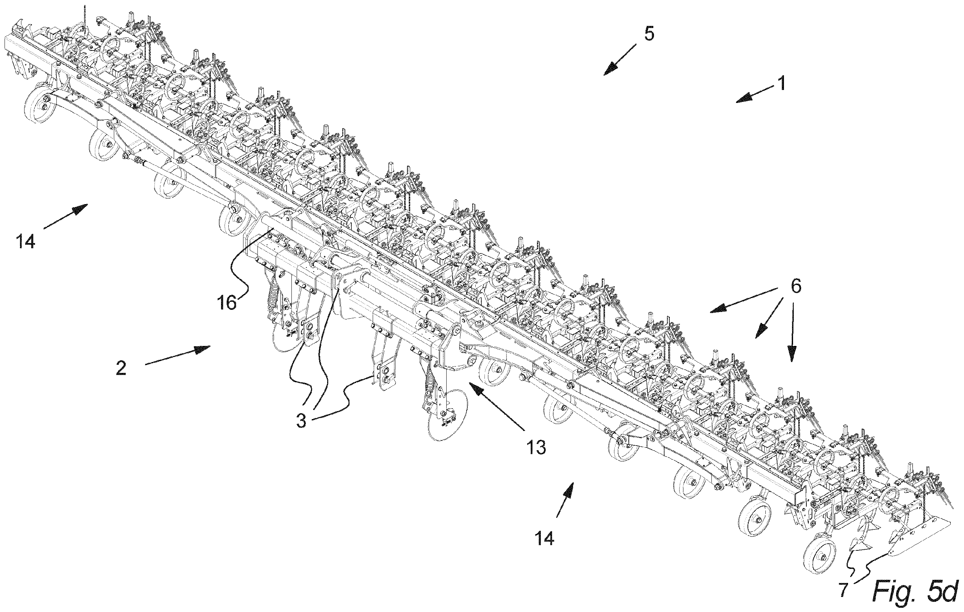

Fig. 5a-d illustrate top, side, back, and angled views of an embodiment of the invention.

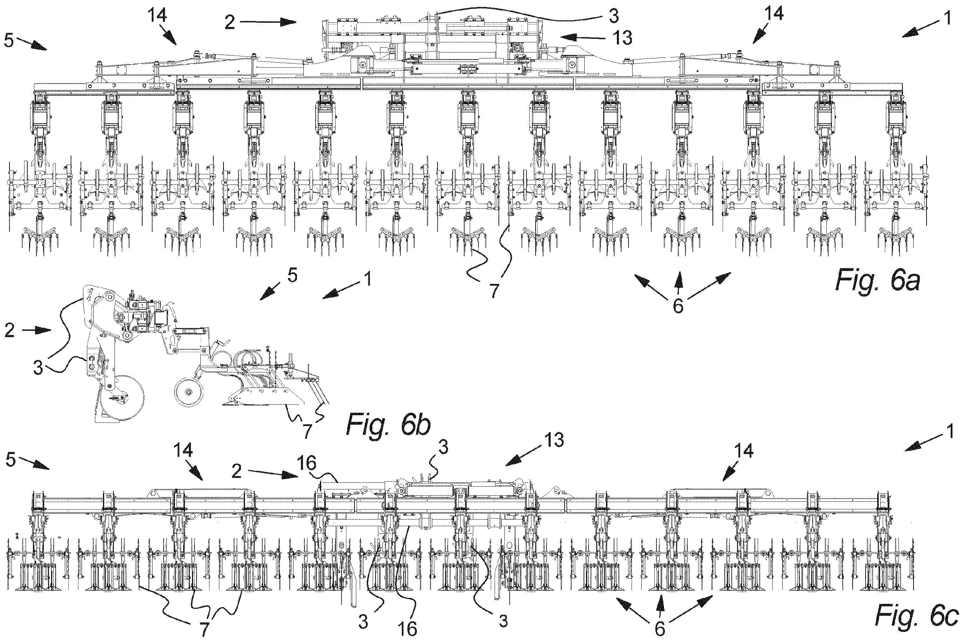

Fig. 6a-c illustrate top, side, and back views of an embodiment of the invention with a tool carrying structure 5 in an offset position.

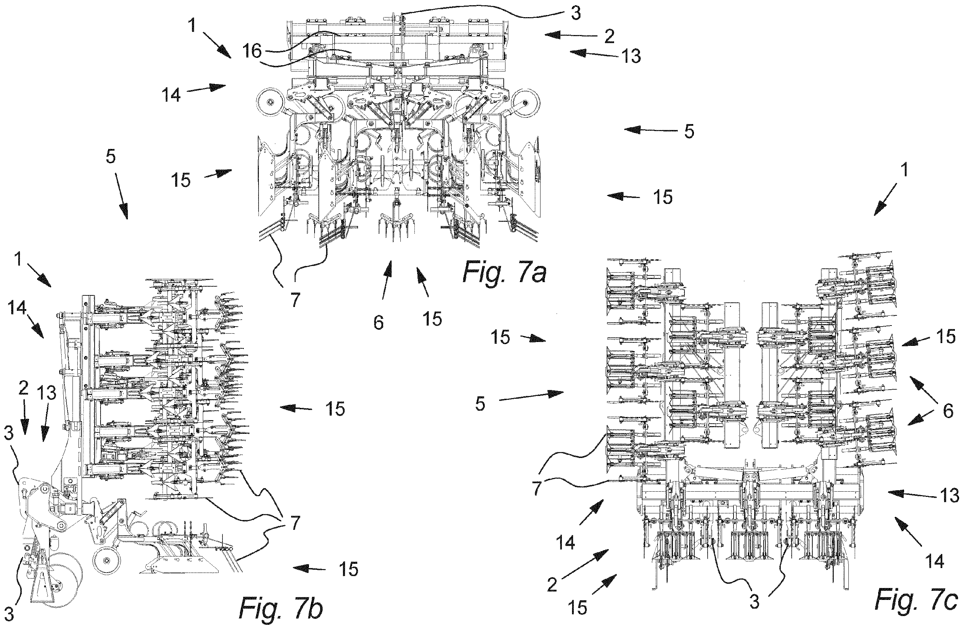

Fig. 7a-c illustrate top, side, and back views of an embodiment of the invention with a folded tool carrying structure 5.

The illustrations of Fig. 5a-d, Fig. 6a-c, and Fig. 7a-c may for example be the same embodiment. It may comprise any of the features of other embodiments of the disclosure and vice versa. E.g., it may contain a row detection system although a row detection system is not indicated in the illustrations.

In contrast to previous figures, Fig. 5a-d, Fig. 6a-c, and Fig. 7a-c illustrate guide means, which may guide the tool carrying structure 5 along the traverse direction relative the mounting device 2, for example for adjustments or an offset.

Further, folding means 14 are illustrated. And Fig. 7a-c illustrate how the folding means may be used to fold a part 15 of the tool carrying structure 5 at least partly over another part 15 of the tool carrying structure 5. Namely, the embodiment has a tool carrying structure 5 which is segmented into three parts 15, where the two outermost parts 15 are folded upwards such that they are partly over the middle part. The three parts 15 are hinged together and folding/unfolding is performed by activating linear actuators which fold/unfold the tool carrying structure 5 at where the parts 15 are hinged together. This enables easier transport and storage.

From the above, it is now clear that the invention relates to an interrow cultivator and a method for cultivating ground/soil between rows of crop. By having means for offsetting a tool carrying structure transversely, e.g. relative to a tractor, it is possible to reduce the risk of damaging crops while using a standard tractor.

The invention has been exemplified above with the purpose of illustration rather than limitation with reference to specific examples of methods and interrow cultivators. Details such as a specific method and system structures have been provided in order to understand embodiments of the invention. Note that detailed descriptions of well-known tools, systems, devices, circuits, and methods have been omitted so as to not obscure the description of the invention with unnecessary details. It should be understood that the invention is not limited to the particular examples described above and a person skilled in the art can also implement the invention in other embodiments without these specific details. As such, the invention may be designed and altered in a multitude of varieties within the scope of the invention as specified in the claims.

### List of reference

- 1: Interrow cultivator
- 2: Mounting structure
- 3: Mounting means
- 4: Tractor
- 5: Tool carrying structure
- 6: Ground tool section
- 7: Ground tool
- 8: Row of crops
- 9: Row detection system
- 10: Adjusting means
- 11: Traverse direction
- 12: Side offsetting means
- 13: Combined adjusting means
- 14: Folding means
- 15: Part of tool carrying structure
- 16: Guide means
- 17: Adjustment range
- 18: Row distance
- 19a: First side ground engaging means
- 19b: Second side ground engaging means
- 20: Ground engaging means gauge
- 21: Centre of tool carrying structure
- 22: Centre of mounting structure
- 23: Indication line
- S1-S8: Method steps

## Claims

1. An interrow cultivator (1) comprising:
a mounting structure (2) comprising mounting means (3) for mounting said interrow cultivator (1) onto a tractor (4);
a tool carrying structure (5) including several ground tool sections (6) wherein each ground tool section (6) comprises at least one ground tool (7) arranged to cultivate the soil between several rows of crops (8);
a row detection system (9) arranged to detect the position of said ground tool sections (6) in relation to said rows (8);
adjusting means (10) arranged to adjust the position of said tool carrying structure (5) in a traverse direction (11) of said tool carrying structure (5) in response to input from said row detection system (9); and
side offsetting means (12) arranged to offset said tool carrying structure (5) half the distance between two neighbouring ground tool sections (6) of said ground tool sections (6) in said traverse direction (11).

2. An interrow cultivator (1) according to claim 1, wherein said side offsetting means (12) comprises an offsetting linear actuator connected to said mounting structure (2) and said tool carrying structure (5).

3. An interrow cultivator (1) according to claim 1 or 2, wherein said adjusting means (10) comprises an adjusting linear actuator connected to said mounting structure (2) and said tool carrying structure (5).

4. An interrow cultivator (1) according to any of the preceding claims, wherein said adjusting means (10) and said side offsetting means (12) are the same combined adjusting means (13).

5. An interrow cultivator (1) according to claim 4, wherein said combined adjusting means (13) is a combined linear actuator connected to said mounting structure (2) and said tool carrying structure (5).

6. An interrow cultivator (1) according to any of the preceding claims, wherein said tool carrying structure (5) comprises folding means (14) arranged to fold at least a first part (15) of said tool carrying structure (5) at least partly over a second part (15) of said tool carrying structure (5) to reduce the width of said tool carrying structure (5) in said traverse direction (11).

7. An interrow cultivator (1) according to any of the preceding claims, wherein said adjusting means (10) comprises guide means (16) interconnecting said mounting structure (2) and said tool carrying structure (5).

8. An interrow cultivator (1) according to any of the preceding claims, wherein said row detection system (9) comprises a camera.

9. A method for cultivating between rows of crops (8), said method comprising the steps of:
mounting an interrow cultivator (1) onto a tractor (4);
driving said tractor (4) mounted to said interrow cultivator (1) to a field comprising rows of crops (8), wherein a row distance (18) between said rows of crops (8) in at least a part of said field is substantially uniform;
positioning said tractor (4) with first side ground engaging means (19a) on a first side of said tractor (4) between a first set of neighbouring rows of crops (8) and with second side ground engaging means (19b) on a second side of said tractor (4) between a second set of neighbouring rows of crops (8);
offsetting a tool carrying structure (5) of said interrow cultivator (1) half said row distance (18) in a direction traverse (11) to said rows of crops (8);
engaging the soil between several rows of crops (8) by means of ground tools (7) of said tool carrying structure (5);
driving said tractor (4) mounted to said interrow cultivator (1) in a direction substantially parallel to said rows of crops (8);
detecting the position of said ground tools (7) in relation to said rows of crops (8) by a row detection system (9); and
adjusting the position of said tool carrying structure (5) in said direction traverse (11) to said rows of crops (8) in response to input from said row detection system (9).

10. A method according to claim 9, wherein said method further comprises the step of folding said tool carrying structure (5) to reduce the width of said tool carrying structure before driving said tractor (4) mounted to said interrow cultivator (1) to said field.

11. A method according to claim 9 or 10, wherein said method further comprises the step of unfolding said tool carrying structure (5) to increase the width of said tool carrying structure (5) before engaging said soil.

12. A method according to any of claims 9-11, wherein offsetting said tool carrying structure (5) and adjusting the position of said tool carrying structure (5) is performed by the same combined linear actuator.

13. A method according to any of claims 9-12, wherein said method further comprises the step of adjusting a ground engaging means gauge (20) of said tractor (4) and/or adjusting the distance between neighbouring ground tools (7) to substantially match said row distance (18).

14. A method according to any of claims 9-13, wherein said method is performed by means of an interrow cultivator (1) according to any of claims 1-8.

15. Use of an interrow cultivator (1) according to any of claims 1-8 for cultivating the soil between rows of maize.
